# FASCICULE DE BREVET EUROPEEN

(11) **EP 1 193 821 B1**
(45) Date de publication et mention de la délivrance du brevet: **07.05.2003**
(21) Numéro de dépôt: 01490030.2
(22) Date de dépôt: 16.08.2001
(51) Int. Cl.: H02G 3/06

(54) **Troncon de chemin à cables à éclisse rétractable, chemin à cables obtenus par assemblage de tels troncons.**
Kabelrinnenabschnitt mit einziehbarem Verbinder und damit hergestellte Kabelrinne
Section of cableway with retractable connector and cableway obtained by assembling two sections

(30) Priorité: 27.09.2000 FR 0012334
(43) Date de publication de la demande: 03.04.2002
(73) Titulaire: Tolmega, S.A., 62400 Bethune (FR)
(72) Inventeur: Colmart, André, 62290 Noeux Les Mines (FR)
(74) Mandataire: Matkowska, Franck

(56) Documents cités:
- EP-A- 0 571 307
- EP-A- 1 061 623
- NL-C- 120 180

## Description

L'invention se rapporte au domaine technique des systèmes de support de câbles, notamment de câbles électriques et/ou de câbles de télécommunications ou équivalents.

On connaît dans l'art antérieur trois grands types de supports de câbles : les échelles à câbles, les chemins à câbles en treillis de fils, et les goulottes.

Par « chemins à câbles en treillis de fils » on désigne ici des chemins à câbles réalisés par assemblage de deux séries de fils, à savoir, une première série de fils, communément appelés fils de chaîne, courant longitudinalement, de manière typiquement rectiligne ou quasi rectiligne sur toute leur longueur ; et une deuxième série de fils, communément appelés fils de trame, établis transversalement, de place en place, le long de ces fils de chaîne.

Les fils de chaîne et les fils de trame sont le plus souvent en alliage métallique et leur assemblage est conventionnellement réalisé par soudage. Les fils de trame sont typiquement en U, de sorte que le chemin à câbles en treillis comprend un panneau de fond et deux panneaux latéraux, communément appelés ailes. Par « fils » on désigne ici aussi bien des profilés pleins de section transversale sensiblement ovale ou circulaire, que des profilés de section transversale carrée ou rectangulaire. Les fils de trame peuvent notamment se présenter sous forme de bandes étroites, de section transversale rectangulaire.

Des exemples de chemins à câbles en treillis de fil du type présenté ci-dessus peuvent être trouvés dans les documents suivants : demandes de brevet français publiées sous les numéros 2376539, 2576158, 2599906, 2613146, 2617341, 2628904, 2634600, 2645359, 2652206, 2652142, 2669708, 2686393, 2687207, 2691590, 2697313, 2697690, 2698416, 2706973, 2716242, 2716768, 2723270, 2725772, 2725846, 2727186, 2728649, 2734503, 2737355, 2750754, 2766897 ; demandes de brevet européen publiées sous les numéros 0191667, 0229544, 0275185, 0352191, 0355081, 0390668, 0418167, 0553039, 0556137, 0718944, 0818862, 0905843 ; demandes internationales de brevet publiées sous les numéros 96/08063, 99/06746 ; demandes de brevet allemands publiées sous les numéros 2036325, 4037412, 4336168.

Par « goulotte » on désigne ici les chemins à câbles formés par l'assemblage de profilés comprenant au moins une paroi formant fond et deux ailes, ces profilés présentant notamment des sections transversales en U ou en C. Les profilés des goulottes sont classiquement élaborés en matériau polymère, notamment extrudé, ou en alliage métallique. Les parois des goulottes peuvent être pleines ou perforées, et sont parfois configurées sur leur bord libre pour recevoir un couvercle, par exemple par encliquetage.

Des exemples de goulottes du type présenté ci-dessus peuvent être trouvés dans les documents suivants : demandes de brevet en France publiées sous les numéros 1471497, 2290063, 2306552, 2313786, 2365902, 2383539, 2395449, 2406327, 2435844, 2478389, 2481015, 2536219, 2610145, 2610769, 2615587, 2683403, 2686142, 2689605, 2691227, 2691228, 2712831, 2734956, 2749912, 2749913, 2749914, 2769761, 2481015 ; demandes de brevet européen publiées sous les numéros 054456, 113981, 208924, 278923, 292389, 315531, 348285, 403440, 518404, 570272, 657672, 695009, 813012; demande internationale de brevet publiée sous le numéro 93/23694.

L'assemblage des profilés formant tronçons de goulottes est usuellement obtenu par des éclisses ou plaquettes plates, éventuellement articulées, ou par des cornières.

Que ces éclisses soient montées sur des goulottes, des échelles à câbles, ou des chemins à câbles en treillis de fils, on distingue quatre grands types de mise en place et fixation de ces éclisses :
- le boulonnage, ainsi que présenté dans les documents EP-A-0298825, EP-A-0399790, EP-A-0617493 ;
- le soudage, ainsi que présenté dans le document EP-A-0571307 ;
- le rabattement de pattes préalablement introduites dans des perforations des tronçons de goulotte, ainsi que présenté dans les documents FR-A-1584328, EP-A-0461974 ;
- le montage à force ou l'encliquetage, ainsi que présenté dans les documents DE-U-8901613, FR-A-2686141, FR-A-2606843, FR-A-2303843; FR-A-2208219, US-A-5384937, EP-A-0083809, EP-A-0933850.

On connaît par ailleurs des éclisses d'assemblages montées coulissantes :
- pour des goulottes, ainsi que présenté dans le document GB-A-2237454 ;
- pour des échelles à câbles ainsi que présenté dans le document FR-A-2588426 ;
- sur des chemins à câbles en treillis de fils, ainsi que le montre le document EP-A-0822364.

Le montage coulissant des éclisses est rarement employé. En effet, comme indiqué dans le document FR-A-2737355, les éclisses sont des points de faiblesse vis à vis de la continuité électrique.

L'invention vise à fournir une nouvelle conception d'éclisses, notamment pour chemins à câbles en treillis de fils, cette conception étant telle que les éclisses, bien que coulissantes, garantissent une bonne mise à la terre d'un chemin à câbles pourvu de ces éclisses.

La conception des éclisses selon l'invention vise également à répondre de manière optimum aux souhaits des monteurs et utilisateurs, à savoir notamment
- facilité d'assemblage et désassemblage mutuel des tronçons de chemins à câbles ;
- facilité de montage et démontage des chemins à câbles sur des supports tels que consoles ;
- facilité de mise en place et enlèvement d'accessoires sur les chemins à câbles.

A ces fins, l'invention se rapporte, selon un premier aspect, à un tronçon de chemin à câbles comprenant, sur au moins une des ses parties extrêmes, une éclisse apte à être déplacée entre une première position rentrée et une deuxième position déployée, l'éclisse ne saillant sensiblement pas, dans sa position rentrée, au delà du plan transversal tangent à ladite partie extrême de ce tronçon de chemin à câbles.

Dans une première série de réalisations, le tronçon comprend au moins deux parois, l'éclisse étant articulée en rotation autour d'un axe sensiblement parallèle à l'une des parois du tronçon, l'éclisse étant repliée sur elle-même dans sa position rentrée, parallèlement à ladite paroi du tronçon.

Selon une première variante, l'axe d'articulation de l'éclisse est sensiblement disposé dans le plan transversal tangent à la partie extrême du tronçon, l'éclisse comprenant deux sections, de part et d'autre de l'axe d'articulation, à savoir une première section, sensiblement parallèle et en regard d'une des parois du tronçon, et une deuxième section mobile entre 0° et sensiblement 270° par rapport à la première section.

Dans une deuxième variante, le tronçon comprend au moins deux parois, l'éclisse étant télescopique et guidée en coulissement sensiblement parallèlement à l'une des deux parois.

L'éclisse comporte des saillies venant en butée contre des surfaces complémentaires des parois du tronçon, la butée de ces saillies permettant le maintien de l'éclisse au moins dans ses deux positions extrêmes rentrée et déployée.

Selon une deuxième série de réalisations, le tronçon comprend une paroi de fond et deux ailes formées par soudage de fils de trame et fils de chaîne, le guidage en coulissement de l'éclisse étant assuré par son insertion entre les fils de chaîne et au moins une plaquette montée sur les fils de chaîne, ou par son insertion entre les fils de chaîne, après montage d'une plaquette sur l'éclisse.

Selon diverses variantes, le tronçon présente les caractères suivants, éventuellement combinés :
- la plaquette est une plaque comprenant une partie centrale plane à trou traversant, les bords longitudinaux haut et bas de la plaquette étant courbés de sorte à épouser le profil des fils de chaîne sur laquelle la plaquette est montée, l'éclisse comportant une série de trous traversant alignés qui viennent, lorsque l'éclisse est coulissée, sensiblement en regard du trou traversant de la plaquette ;
- le trou central traversant de la plaquette est carré, la plaquette présentant des pattes flexibles, la plaquette étant montée coulissante sur les fils de chaîne, un boulon étant mis en place au travers du trou traversant, ce boulon comprimant au serrage les pattes flexibles sur les fils de chaîne du tronçon, assurant le blocage de la plaquette ;
- la plaquette est en forme de boucle de fil ;
- le tronçon comprend au moins un support de montage d'éclisse, ce support comprenant une plaquette disposée contre des fils de chaîne, cette plaquette étant pourvue d'un clip élastique ou comprenant une tige saillant perpendiculairement de la plaquette entre les fils de chaîne, l'extrémité libre de la tige formant une tête ronde, la tige formant mandrin pour un ressort spiral, l'éclisse comportant au moins un trou traversant oblong de montage sur la tige ;
- la plaquette de guidage en coulissement de l'éclisse est pourvue d'une gorge latérale destinée à l'insertion d'une tige filetée d'un ensemble clip-vis, cet ensemble clip-vis comprenant une plaque sensiblement rigide pourvue d'un trou traversant au travers duquel passe la tige filetée d'une vis, l'ensemble clip-vis comprenant une pièce élastique, le serrage d'un écrou sur la vis conduisant à la déformation de cette pièce élastique, l'élasticité de cette pièce élastique permettant l'encliquetage de l'ensemble clip-vis dans une rainure en forme de queue d'aronde de la plaque rigide ;
- la plaquette forme moyen de fixation de la mise à la terre du tronçon de chemin à câbles ;
- le tronçon comprend une paroi de fond et deux ailes formées par soudage des fils de trame et fils de chaîne, le guidage en coulissement de l'éclisse étant assuré sur une aile du tronçon :
   o en partie haute, par un premier fil de chaîne de l'aile ;
   o en partie basse, par un deuxième fil de chaîne de l'aile ;
   o en face latérale arrière des éclisses, par une première section des fils de trame ;
   o en face latérale avant des éclisses, par une deuxième section des fils de trame, cette deuxième section étant sensiblement parallèle à la première section, la première et la deuxième section des fils de trame étant reliées par une courbure à 180° ;
- l'éclisse est en forme de boucle de fil ;
- le blocage de l'éclisse dans ses positions extrêmes déployée et repliée est assuré par un pli transversal des parties extrêmes de l'éclisse ;
- l'éclisse est pré-montée.

L'invention se rapporte, selon un deuxième aspect, à un chemin à câbles de type goulotte, comprenant au moins deux tronçons tels que présentés ci-dessus, ces tronçons étant de section transversale en U et comprenant une paroi de fond et deux ailes latérales, les ailes latérales étant pourvues de perforations dans lesquelles viennent se loger des saillies de l'éclisse, lorsque celle-ci est en position rentrée et/ou déployée.

L'invention se rapporte également à des chemins à câbles en treillis de fils soudés comprenant au moins deux tronçons tels que présentés ci-dessus, ces tronçons étant de section transversale en U, l'éclisse étant pourvue de saillies venant en butée contre les fils de trame, lorsque l'éclisse est en position rentrée et/ou déployée.

D'autres objets et avantages de l'invention apparaîtront au cours de la description suivante de modes de réalisation, description qui va être effectuée en se référant aux dessins annexés, dans lesquels :
- la figure 1 est une vue en perspective partielle de deux tronçons contigus alignés de chemins à câbles en treillis de fils selon un premier mode de réalisation de l'invention, seules les parties extrêmes aboutées d'un côté latéral des tronçons étant représentées, l'éclisse d'assemblage disposée sur une aile bordant ledit côté latéral des tronçons étant en position repliée
- la figure 2 est une vue analogue à la figure 1, l'éclisse d'assemblage étant en position déployée
- la figure 3 est une vue en perspective partielle de deux tronçons contigus alignés de chemins à câbles en treillis de fils selon un deuxième mode de réalisation de l'invention, seules les parties extrêmes aboutées d'un côté latéral des tronçons étant représentées, l'éclisse d'assemblage disposée sur une aile bordant ledit côté latéral des tronçons étant en position déployée ;
- la figure 4 est une vue latérale d'une aile de tronçon de chemin à câbles en treillis de fil tel que représenté en figure 3, l'éclisse d'assemblage étant en position déployée ;
- la figure 5 est une vue transversale selon la flèche V de la figure 3;
- la figure 6 est une vue analogue à la figure 5 d'une variante de réalisation d'éclisse d'assemblage pour des tronçons de chemins à câbles tels que représentés en figure 3 ;
- la figure 7 est une vue en perspective partielle de deux tronçons contigus alignés de chemins à câbles en treillis de fils selon un troisième mode de réalisation de l'invention, seules les parties extrêmes aboutées d'un côté latéral des tronçons étant représentées, l'éclisse d'assemblage disposée sur une aile bordant ledit côté latéral des tronçons étant en position déployée
- la figure 8 est une vue latérale d'une aile de tronçon de chemin à câbles en treillis de fils tel que représenté en figure 7, l'éclisse d'assemblage étant en position déployée ;
- la figure 9 est une vue transversale selon la flèche IX de la figure 7 ;
- la figure 10 est une vue en coupe transversale d'un tronçon de chemin à câbles en treillis de fils, ce tronçon étant pourvu sur une de ses ailes latérales d'un support pour le guidage d'éclisse et/ou l'assemblage boulonné de cette éclisse ou d'accessoires ;
- la figure 11 est une vue latérale externe de l'aile du tronçon, au droit du support représenté en figure 10 ;
- la figure 12 est une vue latérale interne de l'aile du tronçon, au droit du support représenté en figure 10 ;
- la figure 13 est une vue schématique d'une variante de montage d'une éclisse sur un chemin à câbles en treillis de fils;
- la figure 14 est une vue en coupe longitudinale d'une aile de chemin à câbles sur laquelle est montée une éclisse telle que représentée en figure 13 ;
- les figures 15 et 16 sont des vues de détail de moyens supports d'éclisses du montage de la figure 13
- les figures 17 et 18 sont des vues de détail d'un autre mode de réalisation de moyens supports pour éclisses ou accessoires de chemins à câbles ;
- la figure 19 est une vue d'une aile de goulotte pourvue d'une éclisse télescopique, cette éclisse étant en position rétractée ;
- la figure 20 est une vue en coupe transversale de l'aile de goulotte représentée en figure 19 ;
- la figure 21 est une vue analogue à la figure 19, l'éclisse étant en position déployée ;
- la figure 22 est une en coupe transversale de l'aile de goulotte représentée en figure 21 ;
- la figure 23 est une vue latérale externe d'une aile de goulotte pourvue d'une éclisse articulée, cette éclisse étant vue en position déployée et alignée à l'aile de goulotte ;
- la figure 24 est une vue en coupe transversale de la goulotte de la figure 23, l'éclisse étant vue en position sensiblement perpendiculaire à l'aile de goulotte ;
- la figure 25 est une vue de dessus de la goulotte représentée en figure 24, l'éclisse étant représentée dans quatre positions.

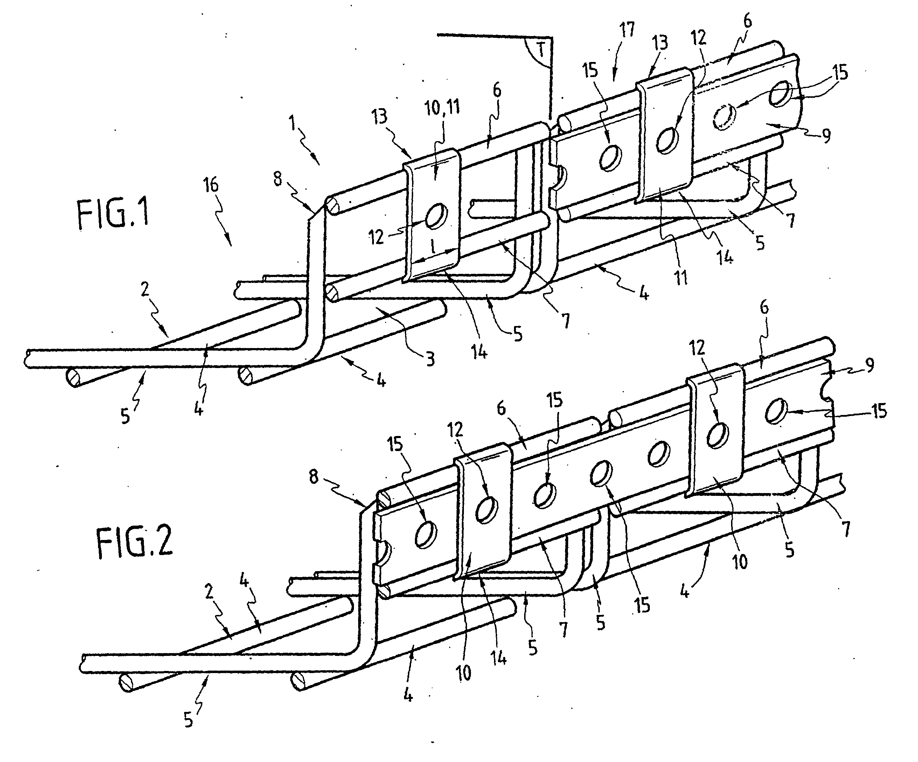

Le chemin à câbles 1 en treillis de fils représenté sur les figures 1 à 12 comprend une paroi de fond 2 et deux ailes latérales, seule une des ailes 3 étant représentée.

La paroi de fond 2, partiellement représentée, est obtenue par soudage de fils de chaîne 4 et de fils de trame 5. Le nombre, le type de profil (rond, ovale ou polygonal), et la répartition des fils de chaîne et de trame sur la paroi de fond ne seront pas décrits, les fils de chaîne pouvant être de tout profil et en nombre variable, et être montés sur la face interne et/ou externe des fils de trame. La paroi de fond peut comprendre en variante ou en combinaison des plaques sensiblement pleines ou perforées, de manière analogue aux parois de fond des goulottes.

Bien que la paroi de fond soit représentée plane, l'homme du métier comprendra que l'invention peut également être appliquée aux chemins à câbles en treillis de fis dont la paroi de fond a été cintrée, par exemple pour un changement de hauteur du chemin à câbles.

L'aile latérale du chemin à câbles en treillis de fils, telle que représentée dans les figures 1 à 16 est sensiblement perpendiculaire à la paroi de fond. Il est entendu toutefois que cette aile pourrait être inclinée par rapport à la paroi de fond, le chemin à câbles ayant ainsi une section en U évasé vers le haut ou vers le bas.

L'aile latérale du chemin à câbles en treillis de fils, telle que représentée dans les figures 1 à 12 est formée par le soudage de deux fils de chaîne 6,7 aux fils de trame 5, l'un des fils de chaîne 6 formant fil de rive. Il est entendu toutefois que l'aile pourrait comporter plus de deux fils de chaîne, régulièrement espacés ou non.

Les fils de chaîne 6,7 de l'aile 3 sont représentés sensiblement rectilignes dans les figures 1 à 12. Il est entendu toutefois que ces fils de chaîne peuvent comporter des ondulations dans des plans longitudinaux horizontaux et/ou dans le plan de l'aile du tronçon de chemin à câbles.

Les parties extrêmes libres 8 des fils de trame représentées en figures 1,2,7,9,10, sont biseautées et s'étendent en dessous des fils de rive 6, de sorte à éviter les blessures sur les gaines des câbles au cours de leur installation ou d'opérations de maintenance.

D'autres moyens de protection des gaines de câbles peuvent être mis en oeuvre, pour éviter que les parties extrêmes des fils de trame ne puissent blesser les câbles. Ainsi, comme décrit dans les documents FR-2 697 313 et DE-4336168, les extrémités des fils de trames peuvent être arrondies, et présenter une surface lisse pour faciliter le glissement des câbles électriques sur celles-ci lors de leur manipulation. En variante, comme proposé dans les documents FR-A-2634600 et EP-A-0352191, les fils longitudinaux de rive peuvent être soudés au voisinage des extrémités des fils de trame, ce soudage étant réalisé du côté opposé à celui du soudage sur les fils de trame des autres fils de chaîne des ailes du chemin à câbles, les fils longitudinaux de rive étant, de plus, repliés au voisinage des fils transversaux de sorte à les contourner. Dans une autre variante, les parties extrêmes des fils de trame peuvent être pliées en crosse dans le plan d'extension de l'aile du chemin à câbles.

Les chemins à câbles considérés ici comprennent le plus souvent deux ailes latérales sensiblement identiques. Il est entendu toutefois que les deux ailes peuvent être de hauteurs différentes, parallèles ou non entre elles.

L'aile 3 représenté sur les figures 1 à 12 s'étend sensiblement selon un plan longitudinal. L'homme du métier comprendra toutefois que l'invention peut être appliquée aux chemins à câbles en treillis de fils dont les ailes sont courbées par cintrage, par exemple pour un changement de direction. Les ailes du chemin à câbles peuvent également comprendre une partie de base, de liaison à la paroi de fond, et une partie supérieure inclinée vers l'intérieur ou l'extérieur par rapport à cette paroi de base.

Sur les figures, l'éclisse d'assemblage est représentée pour son montage sur une aile de chemin à câbles. L'homme du métier comprendra toutefois que le principe de montage selon l'invention peut en variante ou en combinaison être employé pour la mise en place d'éclisses sur la paroi de fond des chemins à câbles.

On se reporte maintenant aux figures 1 et 2 qui illustrent un premier mode de réalisation de l'invention.

Une éclisse 9 de section transversale sensiblement rectangulaire s'étend longitudinalement entre une position extrême rétractée (figure 1) et une position extrême déployée (figure 2).

Lorsque l'éclisse 9 est pré-montée, la position rétractée permet le transport des tronçons de chemins à câbles sans que l'éclisse ne saille au delà du plan extrême transversal T. La position déployée est celle d'assemblage de tronçons aboutés.

Le guidage en coulissement de l'éclisse est assuré par son insertion entre les fils de chaîne 6,7 de l'aile 3 et au moins une plaquette 10 montée sur les fils de chaîne 6,7.

Dans un mode de réalisation, la plaquette est fixée sur les fils de chaîne 6,7 par soudage, ou tout autre moyen équivalent. Lorsque le chemin à câbles est en treillis de fils métallique soudés, la plaquette 10, soudée aux fils de chaîne 6,7 peut ainsi servir de fixation de la mise à la terre du chemin à câbles.

La plaquette 10 peut être de largeur I réduite de sorte à se présenter sous forme d'une bandé sensiblement perpendiculaire aux fils de chaîne 6,7.

Dans le mode de réalisation représenté en figures 1 et 2, la plaquette 10 est une plaque sensiblement rectangulaire comprenant une partie centrale 11 plane à trou traversant 12, les bords longitudinaux haut 13 et bas 14 de la plaquette 10 étant courbés de sorte à épouser le profil des fils de chaîne 6,7 de l'aile 3.

Lorsque l'aile 3 comporte plus de deux fils de chaîne, la plaquette 10 peut être montée sur deux ou plus de deux de ces fils. En variante, plusieurs éclisses peuvent être montées coulissantes par le biais de plusieurs plaquettes placées à des hauteurs différentes sur l'aile.

L'éclisse 10 comporte une série de trous traversant alignés 15 venant sensiblement en regard du trou traversant 12 des plaquettes 10, lorsque l'éclisse 9 est déplacée longitudinalement.

L'éclisse 9 comporte, sur sa face interne, des saillies, ergots ou clips permettant son maintien dans ses deux positions extrêmes rétractée (figure 1) et déployée (figure 2). Le cas échéant, ces clips, ergots ou saillies permettent également le maintien de l'éclisse 9 dans une position intermédiaire entre ces deux positions extrêmes.

Un mode d'assemblage des tronçons représentés en figures 1 et 2 va maintenant être décrit.

Dans une première étape, l'opérateur aboute les extrémités transversales des deux tronçons 16,17 à assembler, les éclisses 9 étant en position rétractée. Le cas échéant, les deux tronçons 16,17 sont montés sur une console ou tout autre support équivalent. Puis l'opérateur déplace les éclisses 9 de sorte à ce qu'elles chevauchent les deux ailes 3 des tronçons 16,17. Le blocage de l'éclisse 9 en position déployée d'assemblage peut être obtenu par des clips, saillies ou ergots, ainsi qu'il a été dit plus haut. Un blocage supplémentaire peut être prévu, par exemple par rivetage ou boulonnage au travers des trous traversant 12,15.

Le guidage en coulissement des éclisses 9 est assuré par les fils de chaîne 6,7 et les plaquettes 10, la forme des éclisses 9 correspondant à la forme de ce guidage, moins un jeu fonctionnel.

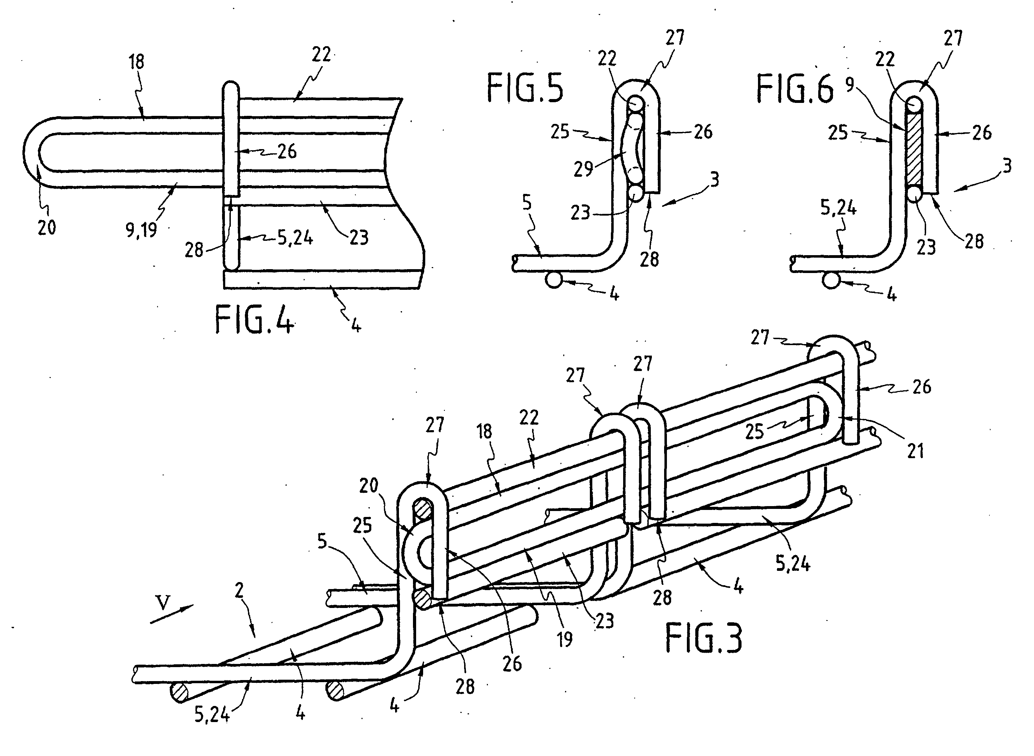

Les éclisses 9 représentées en figures 1 et 2 sont de section rectangulaire. L'homme du métier comprendra qu'il est tout à fait possible, en adaptant la forme des plaquettes 10, de monter des éclisses de section ovale, ronde ou polygonale, ou bien encore en forme de boucles telles que décrites plus loin en référence aux figures 3 à 6.

Les plaquettes 10 peuvent être employées pour fixer une borne de mise à la terre. Les plaquettes 10 peuvent également servir au montage d'accessoires ou à l'association de deux chemins à câbles parallèles.

Dans le mode de réalisation des figures 1 et 2, la plaquette est montée sur les fils de chaîne, extérieurement au chemin à câbles.

Dans un autre mode de réalisation, la plaquette est montée à l'intérieur du chemin à câbles et est montée soudée ou encliquetée sur les fils de chaîne, ou bien encore montée coulissante sur les fils de chaîne, avant serrage et blocage par vissage de la plaquette sur l'éclisse.

On se reporte maintenant aux figures 3 à 6.

Dans la variante de réalisation des figures 3 à 6, les éclisses 9 ont la forme d'une boucle comprenant deux sections sensiblement rectilignes et longitudinales 18,19 reliées par deux parties extrêmes 20,21.

La boucle des éclisses est formée par un fil de largeur sensiblement identique à celle des fils de chaîne 22,23 de l'aile 3. Au moins au voisinage des extrémités des tronçons de chemins à câbles, les parties extrêmes libres des fils de trame 24 forment des crosses transversales, de sorte à venir enserrer les fils de chaîne 22,23 de l'aile 3.

Cette disposition définit un guidage longitudinal, au jeu fonctionnel près, pour les éclisses 9. Ce guidage est assuré:
- en partie haute, par un premier fil de chaîne 22 de l'aile 3 ;
- en partie basse, par un deuxième fil de chaîne 23 de l'aile 3 ;
- en face latérale arrière des éclisses 9, par une première section 25 des fils de trame 24
- en face latérale avant des éclisses 9, par une deuxième section 26 des fils de trame 24, cette deuxième section 26 étant sensiblement parallèle à la première section 25, la première et la deuxième section 25,26 des fils de trame 24 étant reliées par une courbure 27 à 180°.

Le montage des figures 3 à 6 présente deux avantages, par rapport à celui des figures 1 et 2 :
- il n'est pas nécessaire de rapporter, par soudage ou tout autre moyen équivalent, des plaquettes 10 pour le guidage en coulissement des éclisses, ce guidage étant assuré par les seuls fils du chemin à câbles;
- il n'est pas nécessaire d'usiner les extrémités 28 des fils de trame 24 pour éviter qu'ils ne blessent les câbles, ces extrémités 28 étant disposées en regard de la face externe d'un fil de chaîne 23, ce fil de chaîne 23 étant lui-même en face externe de la première section 25 des fils de trame 24. Cette configuration réduit grandement les risques de contact entre les extrémités 28 des fils de trame 24 et les câbles.

Le blocage de l'éclisse en anneau de fil dans ses positions extrêmes déployées et repliées peut être obtenu, ainsi qu'il est représenté en figure 5, par un pliage transversal 29 des parties extrêmes 20,21 de l'éclisse 9.

Le montage de la figure 3 est tout à fait compatible avec l'emploi d'une éclisse de section rectangulaire, du type représentée en figure 1. Un tel montage est schématisé en figure 6.

Des plaquettes de fixation d'accessoires peuvent être montées encliquetées, soudées ou coulissantes avant boulonnage, sur les fils de chaîne de l'aile, ces plaquettes formant surface de guidage supplémentaire pour le coulissement des éclisses.

Le boulonnage des plaquettes peut être assuré par passage de boulons entre les sections 18,19 des éclisses.

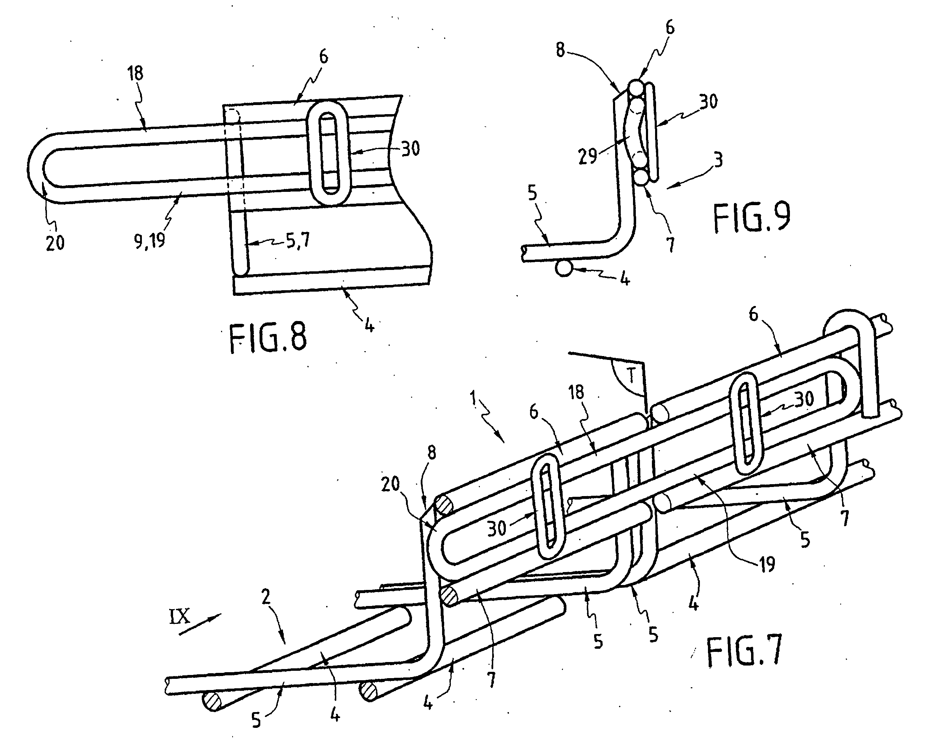

On se reporte maintenant aux figures 7 à 9 qui illustrent un autre mode de réalisation, dans lequel :
- les fils de chaîne et fils de trame sont sensiblement identiques à ceux décrits en référence aux figures 1 et 2 ;
- les éclisses 9 sont sensiblement identiques à celles décrites en références aux figures 3 à 5.

Dans le mode de réalisation des figures 7 à 9, le guidage en coulissement longitudinal des éclisses est assuré, au jeu fonctionnel près :
- en partie haute, par un premier fil de chaîne 6 de l'aile 3 ;
- en partie basse, par un deuxième fil de chaîne 7 de l'aile 3 ;
- en face latérale arrière des éclisses 9, par les fils de trame 5
- en face latérale avant des éclisses 9, par des anneaux 30 soudés sur les fils de trame 5.

Le guidage longitudinal des éclisses peut être renforcé par le soudage ou l'encliquetage de plaquettes 10 telles que décrites en références aux figures 1 et 2.

Le mode de réalisation des figures 7 à 9 est compatible avec l'emploi d'éclisses telles que décrites en référence aux figures 1 et 2.

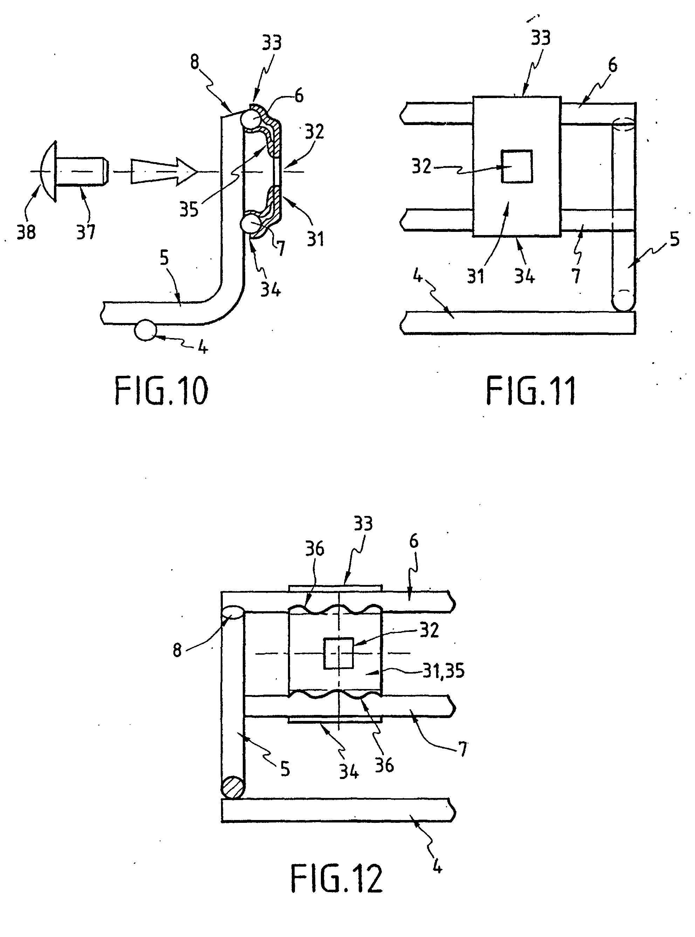

On se reporte maintenant aux figures 10 à 12 qui illustrent un mode particulier de montage de plaquettes 31 sur les fils de chaîne des ailes 3 d'un chemin à câbles.

Ces plaquettes 31 comportent un trou central traversant carré 32. Sur une première face, vue en figure 12, les plaquettes 31 sont de contour sensiblement rectangulaire, leurs deux bords longitudinaux haut et bas 33,34 étant courbées de sorte à venir épouser le profil des fils de chaîne.

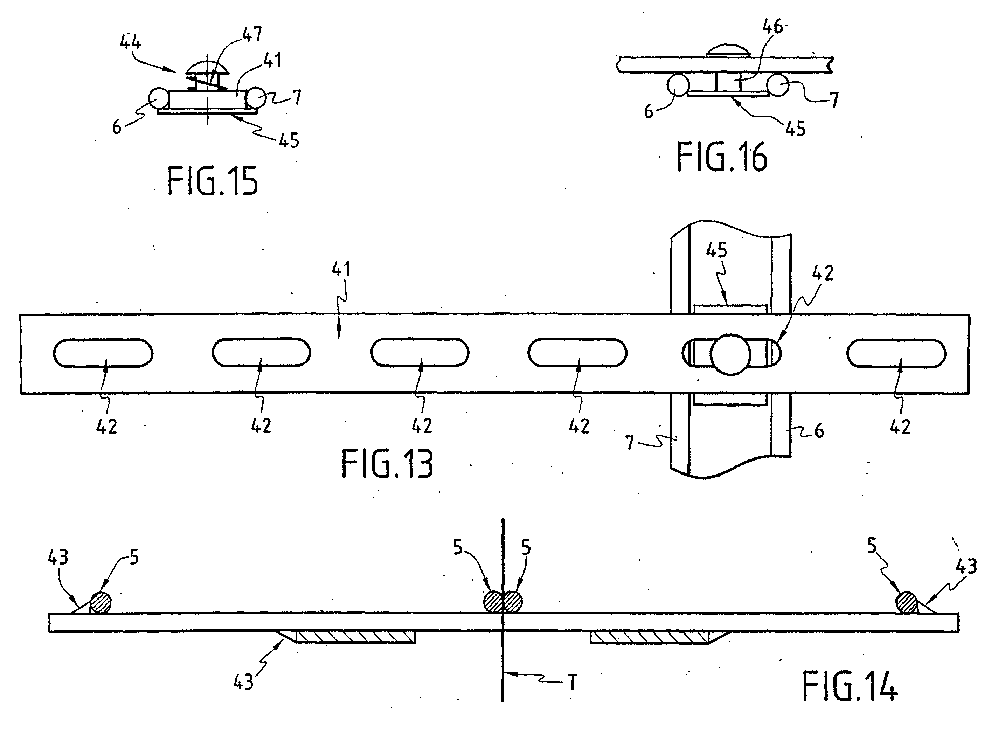

Sur leur face opposée, vue en figure 13, les plaquettes 31 comportent des pattes flexibles 35 à bords libres ondulés 36. Ainsi qu'il est représenté en figure 10, lorsque les plaquettes 31 sont mises en place, le fil de rive 6 est placé entre, en partie haute le bord longitudinal haut 33 de la plaquette 31 et, en partie basse un bord libre 36 de la patte flexible 35. Un deuxième fil de chaîne 7 de l'aile 3 est de même placé entre, en partie haute, le bord longitudinal bas 34 de la plaquette 31 et, en partie basse, un bord libre 36 de la patte flexible 35.

La mise en place d'un boulon 37 au travers du trou traversant 32 renforce l'appui de la plaquette 31 sur les fils de chaîne 6,7. Avant montage du boulon, la plaquette 31 est montée coulissante sur les fils de chaîne 6,7. Le boulon 37 permet, le cas échéant, le blocage d'éclisses ou la mise en place d'accessoires au chemin à câbles. Lorsque le boulon 37 est serré, les pattes flexibles 35 sont plaquées contre les fils de chaîne 6,7, bloquant ainsi la plaquette 31 contre les fils de chaîne.

On se reporte maintenant aux figures 13 à 16. Sur ces figures, l'éclisse 41 est en forme générale de plaque à section rectangulaire pourvue de trous traversant oblongs alignés 42. Cette éclisse 41 est pourvue, sur ses faces interne et externe, de saillies de blocage 43.

Sur les figures 14 et 15, l'éclisse 41 est en position longitudinale de stockage ou d'assemblage. Plus précisément, sur la figure 15, l'éclisse 41 est représentée en coupe transversale, entre deux fils de chaîne 6,7. En figure 14, l'éclisse est vue en coupe longitudinale, perpendiculairement aux fils de trame de deux tronçons successifs de chemins à câbles, la limite entre les deux tronçons étant figurée par la trace du plan transversal d'aboutement T.

Sur les figures 13 et 16, l'éclisse 41 est disposée à 90° par rapport à ces fils de chaîne 6,7, dans une position intermédiaire entre position déployée d'assemblage et position rétractée de stockage ou transport des tronçons de chemins à câbles.

Les supports de montage 44 des éclisses 41 comprennent une plaquette 45 disposée sur la face interne des fils de chaîne 6,7. Sur cette plaquette 45 saillie perpendiculairement une tige 46 dont l'extrémité libre forme une tête ronde fraisée ou bombée.

La tige 46 forme mandrin pour un ressort spiral 47, ou tout autre moyen élastique équivalent. Lorsque l'éclisse 41 est en position montée, le ressort 47 est tel que représenté en figure 15 et plaque l'éclisse dans son logement entre les fils de chaîne 6,7. Lorsque l'éclisse est telle que représentée en figures 13 et 16, le ressort 47 est dans sa position extrême comprimée et tend à plaquer l'éclisse contre les fils de chaîne 6,7.

L'assemblage des tronçons 16,17 s'effectue en faisant tourner d'un demi-tour l'éclisse 41 entre :
- une première position, dite de stockage ou de transport des tronçons, l'éclisse étant disposée entre les fils de chaîne d'un premier tronçon 16 et ne saillant pas au delà du plan transversal T d'extrémité de ce tronçon ;
- une deuxième position, dite d'assemblage, telle que représentée en figure 14, l'éclisse étant disposée entre les fils de chaîne des tronçons contigus, les saillies 43 étant en appui sur les fils de trame et/ou les plaquettes 45.

Dans une variante de réalisation, non représentée, la plaquette 45 supporte, en lieu et place de l'ensemble tige 46/ ressort 47, un clip élastique.

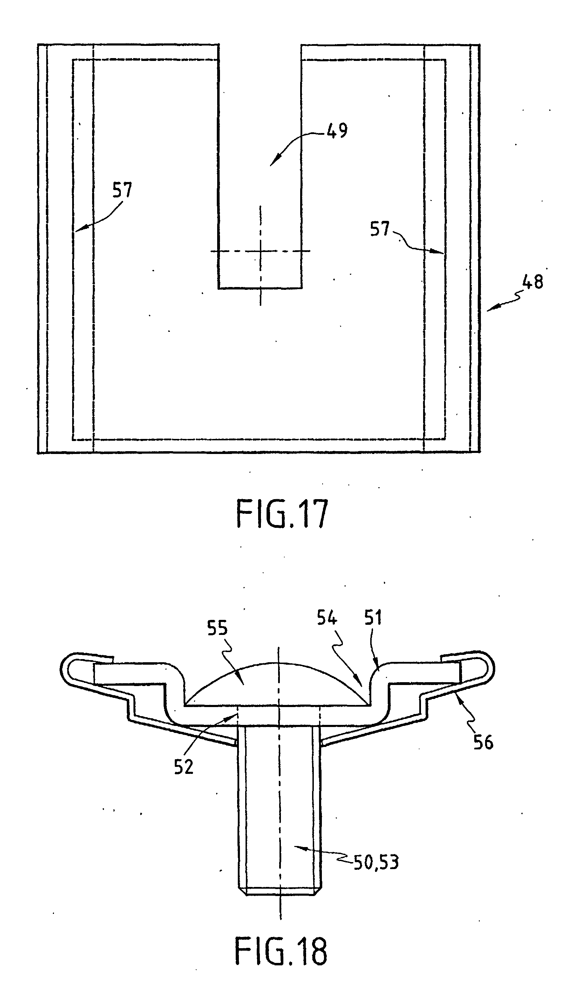

On se reporte maintenant aux figures 17 et 18. Sur la figure 17 est représentée une plaquette 48 de guidage en coulissement d'une éclisse, cette plaquette 48 étant pourvue d'une gorge latérale 49 destinée à l'insertion d'une tige filetée 50 d'un ensemble clip-vis tel que représenté en figure 18.

Cet ensemble clip-vis comprend une plaque sensiblement rigide 51 pourvue d'un trou traversant 52 au travers du quel passe la tige filetée 50 d'une vis 53. La plaque 51 comprend une réservation centrale 54 pour le logement de la tête 55 de la vis 53. L'ensemble clip-vis comprend une pièce élastique 56, le serrage d'un écrou (non représenté) sur la vis 53 conduisant à la déformation de cette pièce élastique 56. L'élasticité de cette pièce élastique 56 permet l'encliquetage de l'ensemble clip-vis dans une rainure 57 en forme de queue d'aronde de la plaque rigide 51. Le serrage d'un écrou sur la vis conduit au blocage de cet encliquetage.

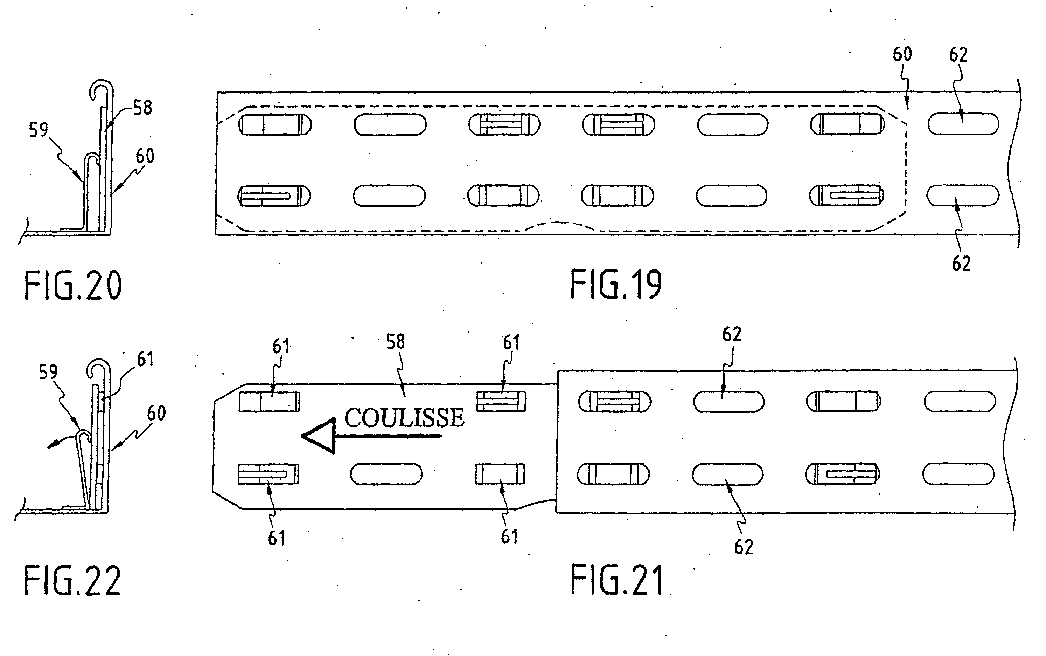

On se reporte maintenant aux figures 19 à 22 qui illustrent un mode de réalisation d'éclisse télescopique pour goulottes.

Cette éclisse 58 est représentée en figures 19 et 20 dans sa position rétractée, les contours de l'éclisse 58 apparaissant en tirets sur la figure 19. Une patte flexible 59 interne à la goulotte forme à la fois
- un moyen de plaquage de l'éclisse contre l'aile de goulotte ;
- une surface de guidage en coulissement pour l'éclisse.

L'éclisse est pourvue de deux rangées longitudinales de saillies 61 aptes à venir se loger au travers de trous traversant oblongs alignés 62 ménagés sur l'aile de la goulotte.

Dans la position extrême rétractée de l'éclisse (figure 19), les saillies 61 sont logées dans les trous 62 de l'aile 60 de goulotte et la patte flexible 59 s'étend sensiblement parallèlement à l'aile de goulotte.

Au cours du coulissement de l'éclisse, les saillies 61 sont périodiquement en appui sur la face interne de l'aile de goulotte (figure 22) ce qui conduit au pivotement et à la mise sous contrainte de la patte flexible 59.

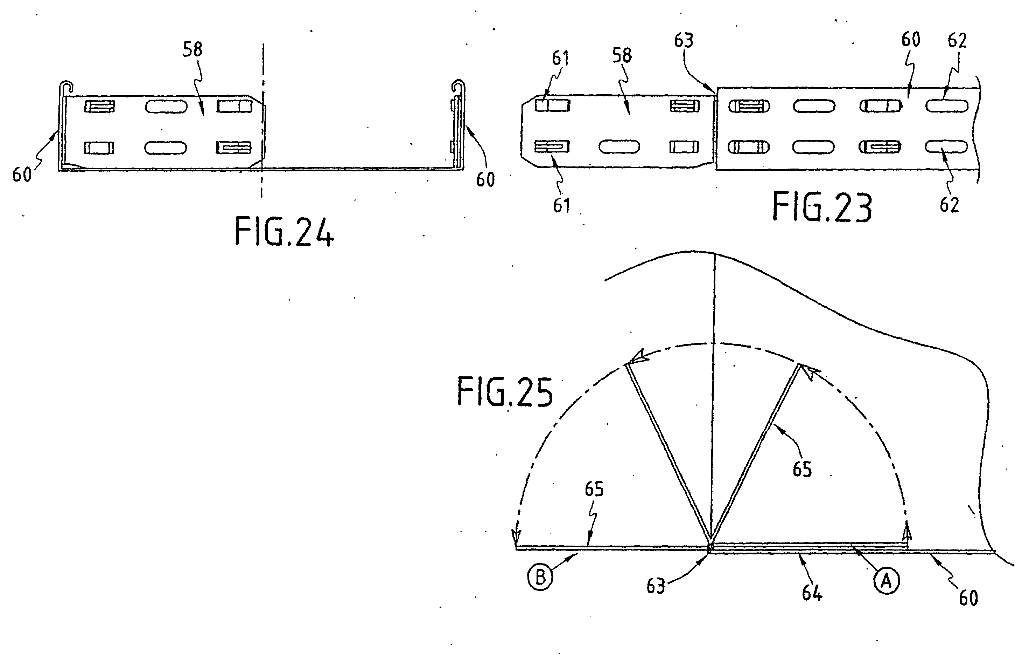

Le mode de réalisation des figures 23 à 25 est une variante de celui qui vient d'être décrit en référence aux figures 19 à 22. Selon cette variante, les éclisses 58 sont pourvues, sensiblement à leur mi-longueur, d'une articulation d'axe 63 sensiblement parallèle au plan d'extension de l'aile de goulotte. Cette disposition permet le changement de direction d'un chemin à câble en goulotte.

L'éclisse représentée en figures 23 à 25 peut être rabattue autour de l'axe d'articulation, cet axe étant disposé à demeure en partie extrême transversale libre des tronçons de goulottes. L'éclisse 58 comprend ainsi une première section 64 disposée sensiblement en regard de l'aile de goulotte et une deuxième section 65 montée mobile en rotation par rapport à cette première section 64.

Lorsque l'éclisse 58 est en position rentrée, les deux sections sont repliées l'une sur l'autre, sensiblement parallèlement à l'aile 60 de goulotte. (position A de la figure 25).

Lorsque la deuxième section 65 de l'éclisse est dépliée à 180 ° (position B de la figure 25), l'éclisse 58 sert lors de l'assemblage de tronçons de goulottes sensiblement alignés.

Il est possible d'employer l'éclisse articulée 58 pour l'assemblage de deux tronçons inclinés l'un par rapport à l'autre, la deuxième section 65 de l'éclisse pouvant pivoter selon un angle compris entre 0° et 270° environ par rapport à la première section 64 de l'éclisse.

Dans une réalisation, des clips permettent le maintien temporaire des deux sections en position repliées l'une sur l'autre.

L'éclisse articulée peut être disposée en face interne de la goulotte, comme représenté en figures 23 à 25. Selon une variante, non représenté, l'éclisse articulée est placée en face externe de la goulotte.

La première section de l'éclisse peut être montée coulissante sur l'aile 60 de goulotte, ce coulissement étant analogue à celui décrit en figures 19 à 22.

Les conceptions des éclisses selon l'invention répondent de manière optimum aux souhaits des monteurs et utilisateurs, à savoir notamment:
- facilité d'assemblage et désassemblage mutuel des tronçons de chemins à câbles
- facilité de montage et démontage des chemins à câbles sur des supports tels que consoles
- facilité de mise en place et enlèvement d'accessoires sur les chemins à câbles.

## Revendications

1. Tronçon de chemin à câbles de type à treillis de fils ou goulottes à ailes perforées **caractérisé en ce qu'**il comprend, sur au moins une des ses parties extrêmes, une éclisse (9, 41,58) apte à être déplacée entre une première position rentrée et une deuxième position déployée, l'éclisse (9,41,58) ne saillant sensiblement pas, dans sa position rentrée, au delà du plan transversal tangent (T) à ladite partie extrême de ce tronçon de chemin à câbles.

2. Tronçon de chemin à câbles selon la revendication 1, **caractérisé en ce qu'**il comprend au moins deux parois, l'éclisse (58) étant articulée en rotation autour d'un axe (63) sensiblement parallèle à l'une des parois du tronçon, l'éclisse (58) étant repliée sur elle-même dans sa position rentrée, parallèlement à ladite paroi du tronçon.

3. Tronçon de chemin à câbles selon la revendication 2, **caractérisé en ce que** l'axe d'articulation (63) de l'éclisse (58) est sensiblement disposé dans le plan transversal tangent (T) à la partie extrême du tronçon, l'éclisse (58) comprenant deux sections, de part et d'autre de l'axe d'articulation, à savoir une première section (64), sensiblement parallèle et en regard d'une des parois (60) du tronçon, et une deuxième section (65) mobile entre 0° et sensiblement 270° par rapport à la première section (64).

4. Tronçon de chemin à câbles selon la revendication 1, **caractérisé en ce qu'**il comprend au moins deux parois, l'éclisse (9,41) étant télescopique et guidée en coulissement sensiblement parallèlement à l'une des deux parois.

5. Tronçon de chemin à câbles selon la revendication 4, **caractérisé en ce** l'éclisse (41) comporte des saillies (43) venant en butée contre des surfaces complémentaires des parois du tronçon, la butée de ces saillies (43) permettant le maintien de l'éclisse aux moins dans ses deux positions extrêmes rentrée et déployée.

6. Tronçon de chemin à câbles selon la revendication 4 ou 5, **caractérisé en ce qu'**il comprend une paroi de fond (2) et deux ailes (3) formées par soudage de fils de trame (5) et fils de chaîne (4,6,7), le guidage en coulissement de l'éclisse (9) étant assuré par son insertion entre les fils de chaîne (6,7) et au moins une plaquette (10,31,48) montée sur les fils de chaîne (6,7) ou par son insertion entre les fils de chaîne (6,7) après montage d'une plaquette sur l'éclisse.

7. Tronçon de chemin à câbles selon la revendication 6, **caractérisé en ce que** la plaquette (10,31) est une plaque comprenant une partie centrale (11) plane à trou traversant (12,32), les bords longitudinaux haut (13,33) et bas (14,34) de la plaquette (10,31) étant courbés de sorte à épouser le profil des fils de chaîne (6,7) sur laquelle la plaquette est montée, l'éclisse (10) comportant une série de trous traversant alignés (15) qui viennent, lorsque l'éclisse est coulissée, sensiblement en regard du trou traversant (12,32) de la plaquette (10).

8. Tronçon de chemin à câbles selon la revendication 7, **caractérisé en ce que** le trou central traversant (32) de la plaquette est carré, la plaquette (31) présentant des pattes flexibles (35), qui autorisent le coulissement de cette plaquette sur les fils de chaîne du tronçon, un boulon (37) étant mis en place au travers du trou traversant (32), ce boulon comprimant au serrage les pattes flexibles (35) sur les fils de chaîne, assurant le blocage de la plaquette.

9. Tronçon de chemin à câbles selon la revendication 6, **caractérisé en ce que** les plaquettes sont en forme de boucle de fil (30).

10. Tronçon de chemin à câbles selon la revendication 4 ou 5, **caractérisé en ce qu'**il comprend au moins un support de montage (44) d'éclisse (41), ce support (44) comprenant une plaquette (45) disposée contre des fils de chaîne (6,7), cette plaquette comprenant un clip élastique ou comprenant une tige (46) saillant perpendiculairement de la plaquette (45) entre les fils de chaîne, l'extrémité libre de la tige (46) formant une tête ronde, la tige (46) formant mandrin pour un ressort spiral (47), l'éclisse comportant au moins un trou traversant oblong de montage sur la tige (46).

11. Tronçon de chemin à câbles selon la revendication 6, **caractérisé en ce que** la plaquette (48) de guidage en coulissement de l'éclisse est pourvue d'une gorge latérale (49) destinée à l'insertion d'une tige filetée (50) d'un ensemble clip-vis, cet ensemble clip-vis comprenant une plaque sensiblement rigide (51) pourvue d'un trou traversant (52) au travers du quel passe la tige filetée (50) d'une vis (53), l'ensemble clip-vis comprenant une pièce élastique (56), le serrage d'un écrou sur la vis (53) conduisant à la déformation de cette pièce élastique (56), l'élasticité de cette pièce élastique permettant l'encliquetage de l'ensemble clip-vis dans une rainure (57) en forme de queue d'aronde de la plaque rigide (51).

12. Tronçon de chemin à câbles selon l'une quelconque des revendications 6 à 11, **caractérisé en ce que** la plaquette forme moyen de fixation de la mise à la terre du tronçon de chemin à câbles.

13. Tronçon de chemins à câbles selon la revendication 4 ou 5, **caractérisé en ce qu'**il comprend une paroi de fond et deux ailes formées par soudage des fils de trame et fils de chaîne, le guidage en coulissement de l'éclisse étant assuré sur une aile du tronçon
- en partie haute, par un premier fil de chaîne (22) de l'aile (3) ;
- en partie basse, par un deuxième fil de chaîne (23) de l'aile (3) ;
- en face latérale arrière des éclisses (9), par une première section (25) des fils de trame (24) ;
- en face latérale avant des éclisses (9), par une deuxième section (26) des fils de trame (24), cette deuxième section (26) étant sensiblement parallèle à la première section (25), la première et la deuxième section (25,26) des fils de trame (24) étant reliées par une courbure (27) à 180°.

14. Tronçon de chemin à câbles selon l'une quelconque des revendications 4 à 13, **caractérisé en ce que** l'éclisse est en forme de boucle de fil.

15. Tronçon de chemin à câbles selon la revendication 14, **caractérisé en ce que** le blocage de l'éclisse dans ses positions extrêmes déployées et repliées est assuré par un pli transversal (29) des parties extrêmes (20,21) de l'éclisse.

16. Tronçon de chemin à câbles selon l'une quelconque des revendications précédentes, **caractérisé en ce que** l'éclisse est pré-montée.

17. Chemin à câbles de type goulotte, comprenant au moins deux tronçons tels que présentés dans l'une quelconque des revendications 1 à 4, ces tronçons étant de section transversale en U et comprenant une paroi de fond et deux ailes latérales, les ailes latérales (60) étant pourvues de perforations (62) dans lesquelles viennent se loger des saillies (61) de l'éclisse (58), lorsque celle-ci est en position rentrée et/ou déployée.

18. Chemin à câbles en treillis de fils soudés comprenant au moins deux tronçons tels que présentés dans l'une quelconque des revendications 6 à 15, ces tronçons étant de section transversale en U, l'éclisse étant pourvue de saillies venant en butée contre les fils de trame, lorsque l'éclisse est en position rentrée et/ou déployée.

## Patentansprüche

1. Teilstück eines Kabelkanals vom Drahtgeflecht- oder Kabelwannen-Typ mit perforierten Schenkeln, **dadurch gekennzeichnet, dass** es auf mindestens einem seiner äußeren Abschnitte eine Schiene (9, 41, 58) aufweist, die zwischen einer ersten eingeschobenen Position und einer zweiten ausgezogenen Position verschiebbar ist, wobei die Schiene (9, 41, 58) in ihrer eingeschobenen Position nicht wesentlich über die transversale Tangentialebebe (T) an dem Endabschnitt dieses Kabelkanal-Teilstückes hinaussteht.

2. Teilstück eines Kabelkanals nach Anspruch 1, **dadurch gekennzeichnet, dass** es mindestens zwei Wände umfasst, wobei die Schiene (58) drehbar um eine im wesentlichen parallele Achse (63) mit einer der Wände des Teilstücks beweglich verbunden ist, wobei die Schiene (58) in ihrer eingeschobenen Position parallel zu der Wand des Teilstücks um sich selbst umgebogen ist.

3. Teilstück eines Kabelkanals nach Anspruch 2, **dadurch gekennzeichnet, dass** die Drehachse (63) der Schiene (58) im wesentlichen in der transversalen Tangentialebene (T) an den Endabschnitt des Teilstücks angeordnet ist, wobei die Schiene (58) zwei Abschnitte beiderseits der Drehachse umfasst, d.h. einen ersten Abschnitt (64), der im wesentlichen parallel und einer der Wände (60) des Teilstücks gegenüberliegend angeordnet ist, und einen zweiten Abschnitt (65), der zwischen 0 und im wesentlichen 270 °, gegenüber dem ersten Abschnitt (64) beweglich ist.

4. Teilstück eines Kabelkanals nach Anspruch 1, **dadurch gekennzeichnet, dass** es zwei Wände umfasst, wobei die Schiene (9,41) ausziehbar und gleitend geführt wird im wesentlichen parallel zu einer der beiden Wände.

5. Teilstück eines Kabelkanals nach Anspruch 4, **dadurch gekennzeichnet, dass** die Schiene (41) Erhebungen (43) aufweist, die an komplementäre Oberflächen der Wände des Teilstücks anstoßen, wobei das Anstoßen dieser Erhebungen (43) das Festhalten der Schiene mindestens in ihren beiden eingeschobenen und ausgezogenen Endpositionen erlaubt.

6. Teilstück eines Kabelkanals nach Anspruch 4 oder 5, **dadurch gekennzeichnet, dass** es eine Bodenwand (2) und zwei Schenkel (3) umfasst, die durch Verschweißen von Schussdrähten (5) und Kettdrähten (4,6,7) hergestellt worden sind, wobei die gleitende Führung der Schiene (9) durch ihre Einführung zwischen die Kettdrähte (6,7) und mindestens ein Plättchen (10,31,48), das auf den Kettdrähten (6,7) befestigt ist, oder durch ihre Einführung zwischen den Kettfäden (6,7) nach der Befestigung eines Plättchens auf der Schiene gewährleistet ist.

7. Teilstück eines Kabelkanals nach Anspruch 6, **dadurch gekennzeichnet, dass** das Plättchen (10,31) eine Scheibe ist, die einen ebenen zentralen Abschnitt (11) mit einem durchgehenden Loch (12,32) aufweist, wobei die oberen Längsränder (13,33) und die unteren Längsränder (14,34) des Plättchens (10,31) so umgebogen sind, dass sie sich an das Profil der Kettdrähte (6,7) anschmiegen, auf dem das Plättchen befestigt ist, wobei die Schiene (10) eine Reihe von aufeinander ausgerichteten durchgehenden Löchern (15) aufweist, die dann, wenn die Schiene gleitend verschoben wird, im wesentlichen gegenüber dem durchgehenden Loch (12,32) des Plättchens (10) liegen.

8. Teilstück eines Kabelkanals nach Anspruch 7, **dadurch gekennzeichnet, dass** das durchgehende zentrale Loch (32) des Plättchens quadratisch ist, wobei das Plättchen (31) flexible Klauen (35) aufweist, die das Gleiten dieses Plättchens auf Kettdrähten des Teistückes erlauben, wobei eine Schraube (37) durch das durchgehende Loch (32) hindurchgesteckt ist, welche die flexiblen Klauen (35) auf den Kettfäden unter Druck zusammenpressen, wodurch die Blockierung des Plättchens gewährleistet ist.

9. Teilstück eines Kabelkanals nach Anspruch 6, **dadurch gekennzeichnet, dass** die Plättchen die Form von Drahtschleifen (30) haben.

10. Teilstück eines Kabelkanals nach Anspruch 4 oder 5, **dadurch gekennzeichnet, dass** es mindestens einen Träger (44) zur Befestigung der Schiene (41) aufweist, wobei dieser Träger (44) ein Plättchen (45) aufweist, das auf den Kettfäden (6,7) angeordnet ist, wobei dieses Plättchen einen elastischen Clip oder einen Schaft (46) aufweist, der senkrecht zu dem Plättchen (45) zwischen den Kettdrähten vorsteht, wobei das freie Ende des Schaftes (46) einen runden Kopf bildet, sodass der Schaft (46) einen Dom für eine Spiralfeder (47) bildet, wobei die Schiene mindestens ein durchgehendes Montage-Langloch für den Schaft (46) aufweist.

11. Teilstück eines Kabelkanals nach Anspruch 6, **dadurch gekennzeichnet, dass** das Führungsplättchen (48) beim Verschieben der Schiene mit einer seitlichen Hohlkehle (49) ausgestattet ist für die Einführung eines mit einem Gewinde versehenen Schaftes (50) einer Clip-Schrauben-Anordnung, wobei diese Clip-Schrauben-Anordnung eine im wesentlichen starre Scheibe (51) aufweist, die mit einem durchgehenden Loch (52) ausgestattet ist, durch das der mit Gewinde versehene Schaft (50) einer Schraube (53) hindurchgeführt ist, wobei die Clip-Schrauben-Anordnung ein elastisches Teil (56) aufweist, wobei durch das Aufschrauben einer Mutter auf die Schraube (53) zur Deformation dieses elastischen Teils (56) führt, wobei die Elastizität dieses elastischen Teils das Einrasten der Clip-Schrauben-Anordnung in eine schwalbenschwanzförmige Nut (57) der starren Scheibe (51) erlaubt.

12. Teilstück eines Kabelkanals nach einem der Ansprüche 6 bis 11, **dadurch gekennzeichnet, dass** das Plättchen ein Mittel zur Fixierung beim Aufdenbodenstellen (Einbauen) des Teilstück des Kabelkanals bildet.

13. Teilstück eines Kabelkanals nach Anspruch 4 oder 5, **dadurch gekennzeichnet, dass** es eine Bodenwand und zwei Schenkel umfasst, die durch Verschweißen von Schussdrähten und Kettdrähten hergestellt worden sind, wobei die Führung zum gleitenden Verschieben der Schiene auf einem Schenkel des Teilstücks gewährleistet ist durch:
- einen ersten Kettdraht (22) des Schenkels (3) im oberen Abschnitt;
- einen zweiten Kettdraht (23) des Schenkels (3) im unteren Abschnitt;
- einen ersten Abschnitt (25) der Schussdrähte (24) auf der hinteren Seitenfläche der Schienen (9);
- einen zweiten Abschnitt (26) der Schussdrähte (24) auf der vorderen Seitenfläche der Schienen (9), wobei dieser zweite Abschnitt (26) im wesentlichen parallel zu dem ersten Abschnitt (25) verläuft, wobei der erste Abschnitt (25) und der zweite Abschnitt (26) der Schussdrähte (24) durch eine Biegung (27) von 180 ° miteinander verbunden sind.

14. Teilstück eines Kabelkanals nach einem der Ansprüche 4 bis 13, **dadurch gekennzeichnet, dass** die Schiene in Form einer Drahtschleife vorliegt.

15. Teilstück eines Kabelkanals nach Anspruch 14, **dadurch gekennzeichnet, dass** die Blockierung der Schiene an ihren ausgezogenen und umgefalteten Endpositionen gewährleistet ist durch eine transversale Umfaltung (29) der Endabschnitte (20,21) der Schiene.

16. Teilstück eines Kabelkanals nach einem der vorhergehenden Ansprüche, **dadurch gekennzeichnet, dass** die Schiene vormontiert ist.

17. Kabelkanal vom Wannen-Typ, der mindestens zwei Teilstücke umfasst, wie sie in einem der Ansprüche 1 bis 4 dargestellt sind, wobei diese Teilstücke U-förmige Querschnitte haben und eine Bodenwand und zwei seitliche Schenkel aufweisen, wobei die seitlichen Schenkel (60) mit Perforationen (62) versehen sind, in denen Vorsprünge (61) der Schiene (58) zu liegen kommen, wenn diese in der eingeschobenen und/oder ausgezogenen Position vorliegt.

18. Kabelkanal in Form eines verschweißten Drahtgeflechtes, der mindestens zwei Teilstücke aufweist, wie sie in einem der Ansprüche 6 bis 15 dargestellt sind, wobei diese Teilstücke einen U-förmigen Querschnitt haben und die Schiene mit Vorsprüngen versehen ist, die an den Schussdrähten zum Anschlag kommen, wenn die Schiene in der eingeschobenen und/oder ausgezogenen Position vorliegt.

## Claims

1. Cable duct section of the wire-netting type or of the trough type with perforated wings, **characterised in that** it comprises, on at least one of its end portions, a connector (9,41,58) capable of being displaced between a first retracted position and a second extended position, said connector (9,41,58) not projecting, in its retracted position, substantially beyond the transverse plane tangential (T) to said end portion of this cable duct section.

2. Cable duct section according to claim 1, **characterised in that** it comprises at least two walls, the connector (58) being articulated in rotation about an axis (63) substantially parallel to one of the walls of the duct section, said connector (58) being folded back on itself in its retracted position, parallel to said duct section wall.

3. Cable duct section according to claim 2, **characterised in that** the axis of articulation (63) of the connector (58) is substantially disposed in the transverse plane tangential (T) to the end portion of the duct section, said connector (58) comprising two sections, on either side of the axis of articulation, i.e. a first section (64), substantially parallel to and facing one of the duct section walls (60), and a second section (65) mobile between 0° and substantially 270° relative to the first section (64).

4. Cable duct section according to claim 1, **characterised in that** it comprises at least two walls, the connector (9,41) being telescopic and guided sliding substantially parallel to one of the two walls.

5. Cable duct section according to claim 4, **characterised in that** the connector (41) comprises projections (43) which are stopped against complementary surfaces of the duct section walls, the stop provided by these projections (43) permitting the connector to be held at least in its two end positions - retracted and extended.

6. Cable duct section according to claim 4 or 5, **characterised in that** it comprises a base wall (2) and two wings (3) formed by welding weft (5) and warp (4,6,7) wires, the guiding of the connector (9) as it slides being ensured by its insertion between the warp wires (6,7) and at least one insert (10,31,48) mounted on the warp wires (6,7) or by its insertion between the warp wires (6,7) after mounting an insert on the connector.

7. Cable duct section according to claim 6, **characterised in that** the insert (10,31) is a plate comprising a flat central portion (11) with a through hole (12,32), the longitudinal top (13,33) and bottom (14,34) edges of the insert (10,31) being curved so as to match the profile of the warp wires (6,7) on which the insert is mounted, the connector (10) including a series of aligned through holes (15) which, when the connector has slid, come substantially opposite the through hole (12,32) of the insert (10).

8. Cable duct section according to claim 7, **characterised in that** the central through hole (32) of the insert is square, said insert (31) having flexible lugs (35) which permit the sliding of this insert on the warp wires of the duct section, a bolt (37) being put in place through the through hole (32) and compressing the flexible lugs (35) until they grip on the warp wires, ensuring the locking of the insert.

9. Cable duct section according to claim 6, **characterised in that** the inserts are in the form of wire loops (30).

10. Cable duct section according to claim 4 or 5, **characterised in that** it comprises at least one connector (41) mounting support (44) , said support (44) comprising an insert (45) disposed against warp wires (6,7) and comprising an elastic clip or a rod (46) which projects perpendicularly from the insert (45) between the warp wires, the free end of the rod (46) forming a round head, the rod (46) itself forming a spindle for a spiral spring (47) and the connector including at least one oblong through hole for mounting on the rod (46).

11. Cable duct section according to claim 6, **characterised in that** the insert (48) for guiding the connector as it slides is provided with a lateral throat (49) intended for the insertion of a threaded shank (50) of a clip/screw assembly, said clip/screw assembly comprising a substantially rigid plate (51) provided with a through hole (52), through which the threaded shank (50) of a screw (53) passes, the clip/screw assembly comprising an elastic part (56), the tightening of a nut on the screw (53) leading to the deformation of this elastic part (56), and the elasticity of this elastic part permitting the clip/screw assembly to be snapped into a dove-tail groove (57) in the rigid plate (51).

12. Cable duct section according to any one of claims 6 to 11, **characterised in that** the insert forms a fixing means for the earthing of the cable duct section.

13. Cable duct section according to claim 4 or 5, **characterised in that** it comprises a base wall and two wings formed by welding weft and warp wires, the guiding of the connector as it slides being ensured on one wing of the duct section:
- in the upper portion, by a first warp wire (22) of the wing (3);
- in the lower portion, by a second warp wire (23) of the wing (3);
- on the rear side face of the connectors (9) by a first section (25) of the weft wires;
- on the front side face of the connectors (9), by a second section (26) of the weft wires (24), this second section (26) being substantially parallel to the first section (25), the first and second sections (25,26) of the weft wires (24) being linked by a curvature (27) at 180°.

14. Cable duct section according to any one of claims 4 to 13, **characterised in that** the connector is in the form of a wire loop.

15. Cable duct section according to claim 14, **characterised in that** locking of the connector in its two end positions, extended and folded back, is ensured by a transverse fold (29) of the end portions (20,21) of the connector.

16. Cable duct section according to any one of the preceding claims, **characterised in that** the connector is pre-assembled.

17. Cable duct of the trough type, comprising at least two duct sections such as presented in any one of claims 1 to 4, these duct sections having a U-shaped cross-section and comprising a base wall and two lateral wings, the lateral wings (60) being provided with perforations (62) in which projections (61) of the connector (58) come to lodge when the latter is in the retracted and/or extended position.

18. Cable duct formed from welded wire-netting, comprising at least two duct sections such as presented in any one of claims 6 to 15, these duct sections having a U-shaped cross-section and the connector being provided with projections which are stopped against the weft wires when the connector is in the retracted and/or extended position.
